(19) Europäisches Patentamt
European Patent Office
Office européen des brevets

(11) EP 0 905 166 B1

(12) # FASCICULE DE BREVET EUROPEEN

(45) Date de publication et mention de la délivrance du brevet:
**14.04.2004 Bulletin 2004/16**

(51) Int Cl.[7]: **C08G 69/16**, C08G 69/18

(21) Numéro de dépôt: **98402269.9**

(22) Date de dépôt: **15.09.1998**

(54) **Procédé de fabrication de polyamides**

Verfahren zur Herstellung von Polyamiden

Process for the preparation of polyamides

(84) Etats contractants désignés:
**AT BE CH DE DK ES FI FR GB GR IE IT LI LU NL PT SE**

(30) Priorité: **25.09.1997 FR 9711955**

(43) Date de publication de la demande:
**31.03.1999 Bulletin 1999/13**

(73) Titulaire: **Atofina**
**92800 Puteaux (FR)**

(72) Inventeurs:
- **Faulhammer, Heike**
  **27300 Bernay (FR)**
- **Dang, Patrick**
  **27300 Bernay (FR)**
- **Jacques, Bernard**
  **27170 Beaumont le Roger (FR)**
- **Werth, Michael**
  **27300 Bernay (FR)**

(74) Mandataire: **Neel, Henry et al**
**Atofina**
**D.C.R.D./D.P.I.**
**4, Cours Michelet,**
**La Défense 10**
**92091 Paris La Défense Cedex (FR)**

(56) Documents cités:
**FR-A- 1 602 751**
**FR-A- 2 150 413**
**FR-A- 2 338 962**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 905 166 B1

Printed by Jouve, 75001 PARIS (FR)

## Description

La présente invention concerne un procédé de fabrication de polyamides et plus particulièrement des polyamides obtenus par la polymérisation anionique des lactames tels que par exemple le caprolactame (lactame 6)

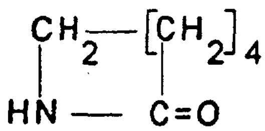

ou le lauryllactame (lactame 12)

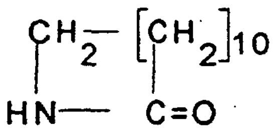

La polymérisation des lactames est décrite par Jan SEBENDA dans J. MACROMOL.SCI.CHEM A 6 (6) PP 1145-1199 (1972).

Le catalyseur de polymérisation anionique peut être par exemple un mélange d'hydrure de sodium et d'acétanilide ou un mélange de sodium et de N-acétylcaprolactame.

La polymérisation anionique des lactames est rapide, de l'ordre de 3 à 15 minutes ; cependant la viscosité inhérente du polyamide obtenu n'est pas stable et évolue dans le temps.

DE 2241131 décrit l'addition de diéthyl malonate ou d'éthyl acétylacétate dans du polyamide 12 obtenu par polymérisation anionique du lactame 12 pour éviter les importantes variations de l'indice de fluidité à l'état fondu (MFI) au cours de sa transformation en fibres, films ou objets moulés.

DE 2241132 décrit l'addition d'alcool tertiobutylique pour le même problème. Ces résultats ne sont pas suffisants et de plus ces additifs migrent avec le temps de sorte que la stabilisation n'est que temporaire.

K. UEDA, M. NAKAI, M. HOSODA et K. TAI ont décrit dans POLYMER JOURNAL Vo. 28, No 12, pages 1084 - 1089 (1996) l'instabilité du polyamide 6 obtenu par polymérisation anionique du caprolactame. Ils décrivent la solubilisation du PA-6 dans le DMSO à 150°C sous azote pour éliminer les résidus du catalyseur anionique par traitement avec un acide de $PK_a$ 3 à 7 dans l'eau. Ce procédé n'est utilisable qu'en laboratoire.

La demanderesse a maintenant trouvé que les polyamides obtenus par polymérisation anionique des lactames présentaient une répartition (ou distribution) des masses molaires mesurées par SEC ayant une forme proche d'une courbe de GAUSS avec une traînée dans les hautes masses et qu'après un traitement thermique la répartition des masses mesurées par la même méthode était devenue unimodale et décalée vers des masses légèrement plus faibles.

Dans la présente invention SEC désigne la chromatographie d'exclusion stérique.

Il suffit de ce traitement thermique pour réarranger la répartition des masses et obtenir un polyamide du même genre que celui obtenu par polymérisation hydrolytique des lactames. La polymérisation hydrolytique des lactames consiste à ouvrir le lactame par l'eau puis à chauffer sous pression pour polymériser. La durée de polymérisation hydrolytique du lactame 12 peut être de 4 à 12 heures, c'est pourquoi on a essayé de produire les polyamides par catalyse anionique en particulier pour pouvoir effectuer la polymérisation en continu.

UEDA et al. (déjà cité) montre que par chauffage à 200°C le polyamide 6 qui n'a pas été traité aux acides dans le DMSO montre une chute de masse $\overline{M}w$ (masse molaire moyenne en poids) plus importante que celui qui a été traité. Il s'agit de la $\overline{M}w$ calculée à partir de la viscosité inhérente. Bien que ces chutes sont selon des courbes asymptotiques au bout de 400 heures de chauffage à 200°C il est expliqué qu'il est nécessaire de traiter aux acides dans le DMSO pour enlever les résidus de catalyseur et ainsi stabiliser. UEDA et al. n'a pas vu la répartition des masses molaires et donc a encore moins vu leur réarrangement. Depuis cette découverte de la demanderesse on peut donc pour préparer un polyamide (polylactame) de masse $\overline{M}w$ (1) et stable, c'est-à-dire transformable en objets, en films, etc... sans voir la viscosité chuter, effectuer la polymérisation anionique avec des réglages tels qu'on obtienne une masse $\overline{M}w$ (2) supérieure à $\overline{M}w$ (1) (et de fait ayant une forme proche d'une courbe de GAUSS avec une traînée dans les hautes masses) puis effectuer un traitement thermique pour réduire cette masse à $\overline{M}w$ (1), le polyamide restant stable par la suite.

La présente invention est donc un procédé de préparation de polyamides dans lequel on effectue dans une première étape la polymérisation anionique d'au moins un lactame puis sur le polymère obtenu et qui présente une répartion des masses molaires mesurées par SEC ayant une forme proche d'une courbe de GAUSS avec une traînée dans les hautes masses on effectue dans une deuxième étape un traitement thermique à une température suffisante et pendant un temps suffisant de manière à obtenir une répartition unimodale des masses molaires.

Dans la présente demande le terme SEC désigne la mesure des masses moléculaires de polymères par chromatographie d'exclusion stérique. Cette technique, et plus particulièrement son application aux polyamides et aux polyamides blocs polyethers est décrite dans "Journal of Liquid Chromatography, 11(16), 3305-3319 (1988)".

A titre d'exemple de lactames on peut citer ceux ayant de 3 à 12 atomes de carbone sur le cycle principal et pouvant être substitués. On peut citer par exemple le β,β-diméthylpropriolactame, le α,α-diméthylpropriolactame, l'amylolactame, le caprolactame, le capryllactame et le lauryllactame. L'invention est particulièrement utile pour le caprolactame et le lauryllactame. La première étape c'est-à-dire la polymérisation anionique a été décrite dans l'art antérieur. Elle peut s'effectuer dans tout dispositif par exemple dans une extrudeuse ou dans un moule-. On a découvert que la distribution des masses molaires par SEC avait une forme proche d'une courbe de GAUSS avec une traînée dans les hautes masses. Suivant les conditions de synthèse utilisées, cette traînée peut être plus ou moins importante et constituer un épaulement plus ou moins important du pic principal. La distribution des masses molaires peut aussi se présenter sous la forme de deux courbes de GAUSS successives de tailles très différentes, l'une représentant au moins 80 % en poids et de préférence 95 % du polyamide et l'autre pour le complément et située sur des masses molaires plus élevées. La fig. 1 représente un exemple de cette répartition, le logarithme de la masse molaire est en abscisse (les valeurs croissent avec l'abscisse) en ordonnée le nombre de chaînes d'une même masse (le nombre croît avec l'ordonnée). La figure 4 montre deux exemples de distribution des masses moléculaires présentant des traînées plus ou moins importantes.

La deuxième étape consiste à chauffer le polyamide obtenu en fin de première étape. On peut effectuer cette deuxième étape sur un polyamide qu'on vient d'obtenir dans la première étape et qui peut être à l'état fondu ou en granulés qu'on obtient en tête de l'extrudeuse dans laquelle on a effectué la première étape. Le polyamide peut être stocké entre les deux étapes et traité ultérieurement dans cette deuxième étape. La fin de la première étape est caractérisée par l'obtention d'une viscosité ou d'un MFI, le catalyseur a été consommé, la polymérisation est terminée. Le polyamide provenant de la première étape est introduit tel quel, c'est-à-dire sans traitement préalable pour enlever le catalyseur, dans un dispositif permettant de le chauffer. Le dispositif est adapté à l'état du polyamide c'est-à-dire si il est disponible à l'état fondu ou à l'état de granulés. On peut utiliser tout dispositif de la technique des polymères thermoplastiques tel que par exemple un mélangeur, une extrudeuse à une ou deux vis. On peut aussi effectuer la deuxième étape dans le dispositif de la première étape.

Ce traitement thermique s'effectue par exemple en présence d'eau par exemple sous forme d'air humide. On peut aussi sécher préalablement le polyamide.

La température et la durée de traitement c'est-à-dire le temps pendant lequel le polyamide est porté en température sont fonction de la quantité de hautes masses molaires et de la température de fusion du polyamide. Il est recommandé que la température soit de 20 à 110°C au-dessus de la température de fusion. Il suffit que le polyamide soit à cette température pendant 1 à 90 minutes de préférence 1 à 3 minutes. Si le polyamide est soumis à un malaxage le temps est fortement réduit et peut être par exemple de 20 secondes à 60 secondes. On peut suivre cette deuxième étape par la mesure par SEC et donc facilement déterminer cette durée.

Avantageusement on peut profiter de cette deuxième étape pour incorporer dans le polyamide des charges, des anti-U.V., des antioxydants etc...

A la fin de cette seconde étape on constate par SEC que la répartition est devenue unimodale et que la distribution des masses mesurée en SEC est très semblable à la distribution précédente qui représentait au moins 80 % en poids et de préférence 95 % du polyamide mais légèrement décalée vers des masses plus faibles. A titre d'exemple on a représenté cette distribution en pointillés sur la fig. 1.

Ce décalage de la répartition des masses molaires vers les masses plus faibles peut s'exprimer aussi par une $\overline{M}w$ plus faible.

La demanderesse, sans être liée par cette explication, croit que ce décalage provient d'une hydrolyse résiduelle et pourrait être minimisée. Le décalage et la suppression de la traînée du côté des hautes masses conduisent à une $\overline{M}w$ plus faible. La suppression de la traînée semble plus importante que le décalage pour expliquer la chute de $\overline{M}w$.

On peut aussi traduire cette réduction de $\overline{M}w$ par une baisse de la viscosité inhérente ou une augmentation du MFI.

La viscosité inhérente ($\eta$) est mesurée par viscosimètre UBBELHODE à 25°C dans le metacresol pour 0,5 g de polymère dans 100 ml de metacresol. Ce principe est décrit dans ULLMANN'S Encyclopedia of Industrial Chemistry - Vol. A 20, p. 527 - 528 (1995 - 5e édition).

A titre d'exemple pour le polyamide 12 [ou polylauryllactame ou poly(aminododécanoique acide)] on a observé des baisses de $\eta$ de 10 à 30 % pour une seconde étape effectuée en statique dans des tubes de verre entre 250 et 300°C pendant 10 à 70 minutes.

On a aussi obtenu la même baisse de $\eta$ par un séjour de 20 secondes à 250/270°C sous 400 bars dans une extrudeuse.

## Exemples

### Première étape

On a effectué la polymérisation anionique du lauryllactame en présence de sodium et d'E-acetyl caprolactame.

On obtient par mesure SEC réalisée en alcool benzylique à 130°C, suivant une méthode basée sur la publication "Journal of Liquid Chromatography, 11(16), 3305-3319 (1988)" la répartition qui est représentée sur la fig. 2.

L'analyse par SEC du PA12 anionique sans traitement préalable permet d'observer un épaulement

significatif de la distribution majoritaire des masses moléculaires. Cet épaulement se situe du côté des masses moléculaires les plus élevées et peut être interprété comme résultant de la présence d'une double distribution.

Deuxième étape

La distribution des masses molaires après un traitement dans une presse pendant 20 secondes sous 400 bars avec une température d'injection de 270°C est représentée sur la fig. 2 (pic décalé).

L'analyse par SEC dans les mêmes conditions du PA12 anionique après ce traitement permet de constater une distribution de masses moléculaires unimodale. Aucun épaulement, signe d'une double distribution, n'est plus visible.

On observe que la distribution des masses moléculaires après traitement correspond à la distribution majoritaire observée sur le polymère avant traitement, avec toutefois la possibilité d'un léger décalage vers des masses inférieures.

Il apparait que c'est la disparition de la double distribution qui touche les masses moléculaires les plus élevées qui est, davantage que le léger décalage de la distribution majoritaire, à l'origine de la réduction de masse moléculaire moyenne en poids ($\overline{M}w$) observée.

On a aussi mesuré η sur des granulés (obtenus en fin de première étape) soit bruts (non séchés) soit séchés qu'on a chauffés dans des tubes de verre à différentes températures. Ces résultats sont reportés sur la fig. 3.

Traitement à 270°C

"■" correspond à des granulés bruts (non séchés en fin de première étape) et "x" à des granulés séchés en fin de première étape)

Traitement à 230°C

"♦" correspond à des granulés bruts (non séchés en fin de première étape)

"♦" correspond à des granulés séchés en fin de première étape.

Au cours du traitement dans la presse citée plus haut, η est passé de 1,76 à 1,26 au bout de 20 secondes.

## Revendications

1. Procédé de préparation de polyamides dans lequel on effectue dans une première étape la polymérisation anionique d'au moins un lactame puis sur le polymère obtenu et qui présente une répartition des masses molaires mesurées par SEC ayant une forme proche d'une courbe de GAUSS avec une traînée dans les hautes masses on effectue dans une deuxième étape un traitement thermique à une température suffisante et pendant un temps suffisant de manière à obtenir une répartition unimodale des masses molaires.

2. Procédé selon la revendication 1 dans lequel le lactame est choisi parmi le caprolactame et le lauryllactame.

3. Procédé selon l'une quelconque des revendications précédentes dans lequel la distribution à l'issue de la première étape est telle que dans l'ordre croissant des masses molaires on trouve d'abord au moins 80 % en poids et de préférence 95 % du polyamide pour une distribution et le complément pour la deuxième partie de la distribution.

4. Procédé selon l'une quelconque des revendications précédentes dans lequel la deuxième étape consiste à porter le polyamide à une température de 20 à 110°C au-dessus de sa température de fusion.

5. Procédé selon la revendication 4 dans lequel la durée de la deuxième étape est de 20 secondes à 90 minutes.

## Patentansprüche

1. Verfahren zur Herstellung von Polyamiden, bei dem man in einem ersten Schritt mindestens ein Lactam einer anionischen Polymerisation unterwirft und dann das erhaltene Polymer, das eine mittels SEC bestimmte Molmassenverteilung mit der ungefähren Form einer Gauss-Kurve mit einem Schweif bei hohen Massen aufweist, in einem zweiten Schritt einer Wärmebehandlung bei einer so hohen Temperatur und über einen so langen Zeitraum unterwirft, daß man eine unimodale Molmassenverteilung erhält.

2. Verfahren nach Anspruch 1, bei man das Lactam unter Caprolactam und Lauryllactam auswählt.

3. Verfahren nach einem der vorhergehenden Ansprüche, bei dem die Verteilung nach dem ersten Schritt so beschaffen ist, daß in Reihenfolge zunehmender Molmassen zunächst mindestens 80 Gew.-% und vorzugsweise 95 Gew.-% des Polyamids für eine Verteilung und der Rest für den zweiten Teil der Verteilung gefunden werden.

4. Verfahren nach einem der vorhergehenden Ansprüche, bei dem man im zweiten Schritt das Polyamid auf eine 20 bis 110°C über seinem Schmelzpunkt liegende Temperatur bringt.

**5.** Verfahren nach Anspruch 4, bei dem der zweite Schritt 20 Sekunden bis 90 Minuten dauert.

## Claims

**1.** Method of preparing polyamides, in which, in a first step, the anionic polymerization of at least one lactam is carried out and then, in a second step, a heat treatment is carried out on the polymer obtained, which has a distribution of the molar masses measured by SEC having a shape close to a Gaussian curve with a high-mass tail, at a high enough temperature and for a long enough time so as to obtain a unimodal distribution of the molar masses.

**2.** Method according to Claim 1, in which the lactam is chosen from caprolactam and lauryllactam.

**3.** Method according to any one of the preceding claims, in which the distribution after the first step is such that, in increasing order of molar masses, at least 80% by weight and preferably 95% of the polyamide is firstly found for one distribution and the remainder is found for the second part of the distribution.

**4.** Method according to any one of the preceding claims, in which the second step consists in raising the polyamide to a temperature of from 20 to 110°C above its melting point.

**5.** Method according to Claim 4, in which the duration of the second step is from 20 seconds to 90 minutes.

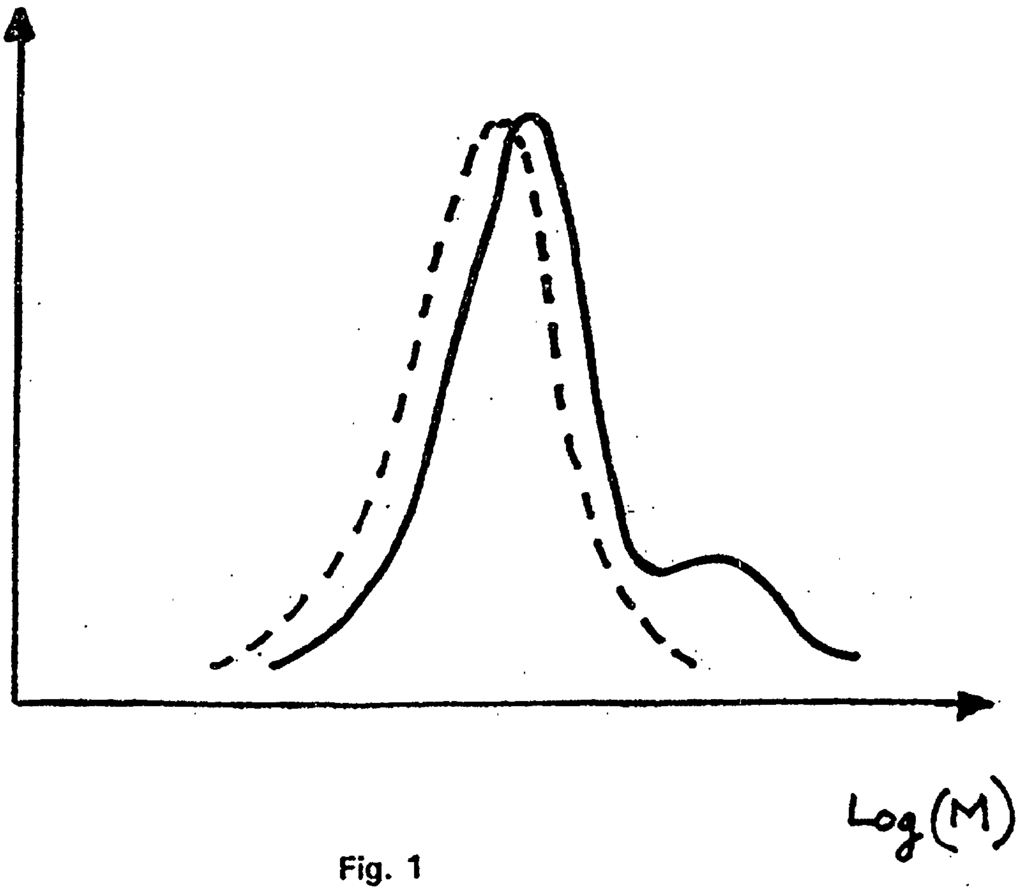


Fig. 1

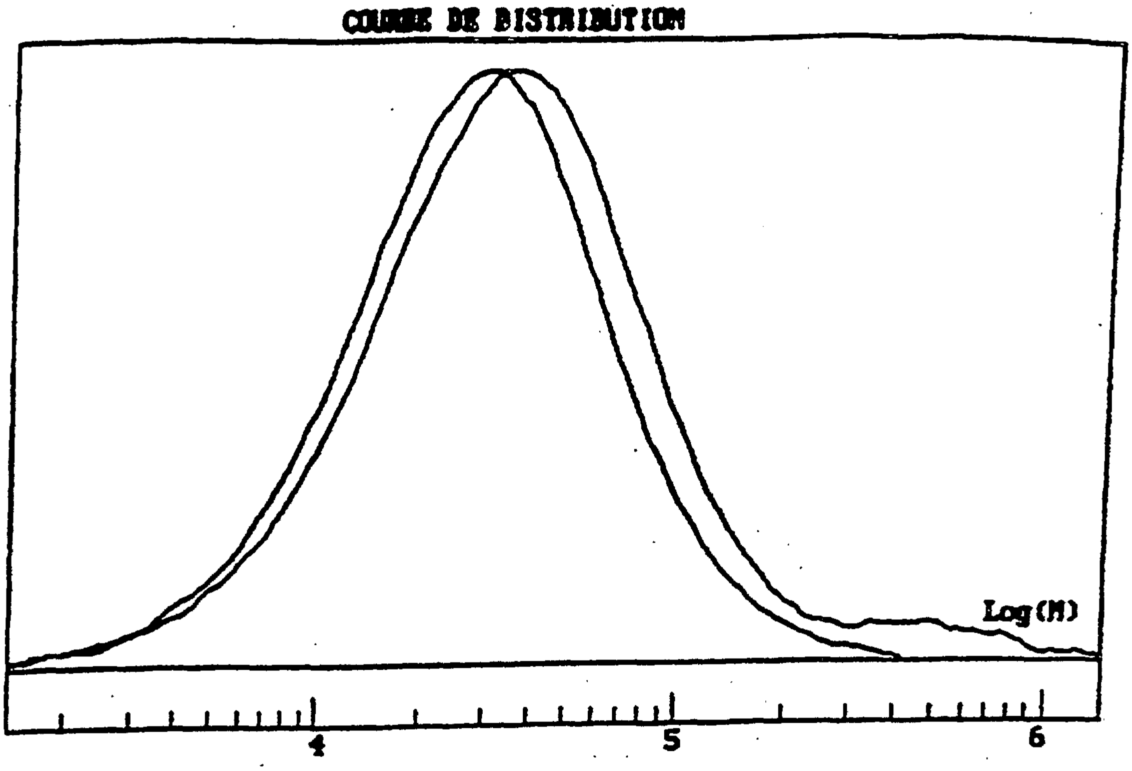


Fig. 2

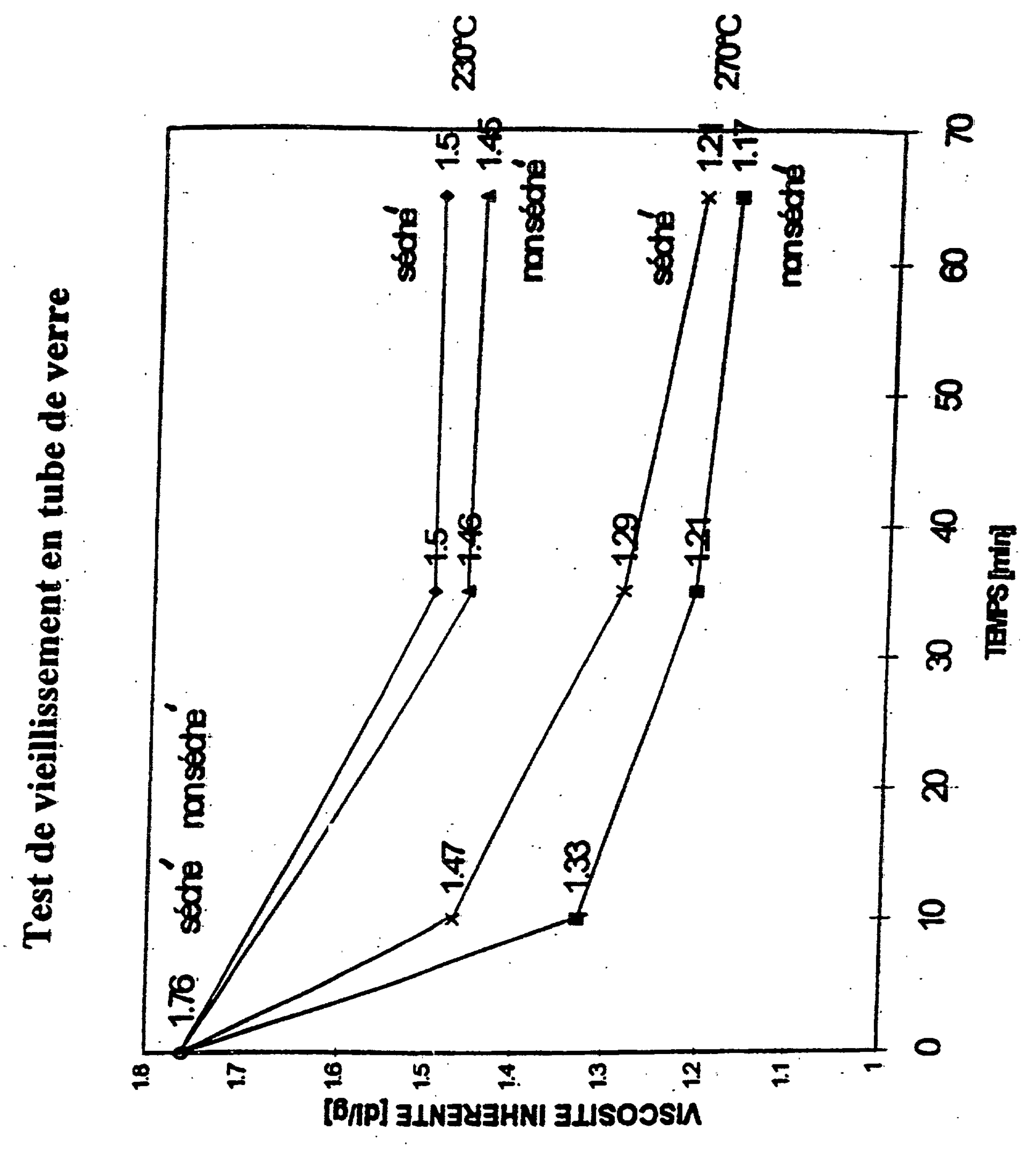
Test de vieillissement en tube de verre
VISCOSITE INHERENTE [dl/g]
TEMPS [min]
230°C
270°C
séché
non séché
1.76
1.5
1.46
1.5
1.45
1.47
1.29
1.21
1.33
1.21
1.17
1.8
1.7
1.6
1.5
1.4
1.3
1.2
1.1
1
0
10
20
30
40
50
60
70

Fig. 3

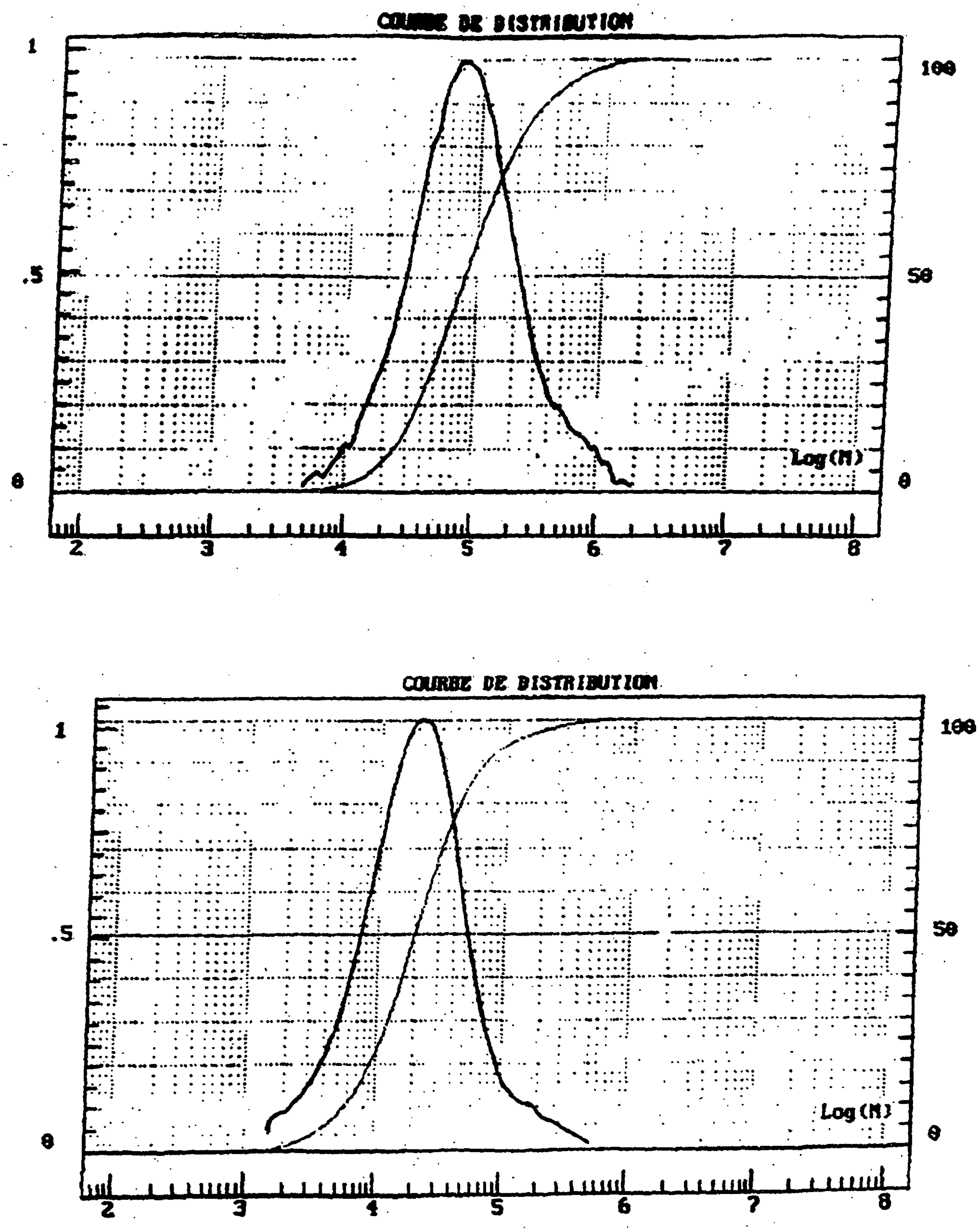
COURBE DE DISTRIBUTION
1
.5
0
100
50
0
Log(M)
2
3
4
5
6
7
8
COURBE DE DISTRIBUTION
1
.5
0
100
50
0
Log(M)
2
3
4
5
6
7
8

Fig. 4